# EUROPEAN PATENT APPLICATION

(11) **EP 4 811 465 A1**
(43) Date of publication of application: **23.09.2026**
(21) Application number: 26161023.2
(22) Date of filing: 26.02.2026
(51) Int. Cl.: H01M 4/72, H01M 10/04, H01M 10/052, H01M 10/0562, H01M 10/0585, H01M 12/00

(54) **BATTERY AND METHOD OF PRODUCING BATTERY**

(30) Priority: 21.03.2025 JP 2025047112
(71) Applicant: Toyota Jidosha Kabushiki Kaisha, Toyota-shi, Aichi-ken 471-8571 (JP)
(72) Inventor: TANAKA, Takumi, Toyota-shi, 471-8571 (JP)
(74) Representative: J A Kemp LLP

(57) **Abstract**

The battery (1A; 1B) of the present disclosure includes a first unit battery (11A) and a second unit battery (12). The first unit battery (11A) and the second unit battery (12) are stacked in the order of the first unit battery (11A) and the second unit battery (12) along the stacking direction (D). The first element serving as the carrier ion of the first unit battery (11A) is different from the second element serving as the carrier ion of the second unit battery (12).

## Description

### BACKGROUND OF THE INVENTION

### 1. Field of the Invention

The present invention relates to a battery and a method of producing the battery.

### 2. Description of Related Art

Japanese Unexamined Patent Application Publication No. 2017-195076 (JP 2017-195076 A) discloses a lithium ion secondary battery 900 shown in FIG. 3. In the lithium ion secondary battery 900, a negative electrode 910T, a third solid electrolyte layer 921, a positive electrode 930, a third solid electrolyte layer 921, a negative electrode 910, a third solid electrolyte layer 921, a positive electrode 930, a first solid electrolyte layer 922, a bipolar electrode 940, a second solid electrolyte layer 923, a negative electrode 910, a third solid electrolyte layer 921, a positive electrode 930, a third solid electrolyte layer 921, a negative electrode 910, a third solid electrolyte layer 921, and a positive electrode 930T are stacked in the order presented along the stacking direction D.

In the negative electrode 910, a negative electrode mixture layer 911 is formed on both surfaces of a negative electrode current collector foil 912. In the negative electrode 910T, the negative electrode mixture layer 911 is formed on one surface of the negative electrode current collector foil 912. In the positive electrode 930, a positive electrode mixture layer 931 is formed on both surfaces of a positive electrode current collector foil 932. In the positive electrode 930T, the positive electrode mixture layer 931 is formed on one surface of the positive electrode current collector foil 932. In the bipolar electrode 940, the negative electrode mixture layer 911 is formed on one surface of the bipolar current collector foil 941, and the positive electrode mixture layer 931 is formed on the other surface of the bipolar current collector foil 941. The positive electrode 930, the third solid electrolyte layer 921, and the negative electrode 910 constitute a unit cell 950.

### SUMMARY OF THE INVENTION

In the bipolar electrode 940, the bipolar current collector foil 941 is required to prevent the ion conduction of lithium ions between the negative electrode mixture layer 911 and the positive electrode mixture layer 931 to prevent short circuits from occurring. To achieve this, the bipolar current collector foil 941 is required to have a certain thickness (e.g., 10 µm to 20 µm). When the bipolar current collector foil 941 has a certain thickness, through-holes are hardly formed in the bipolar current collector foil 941, and the bipolar current collector foil 941 can prevent the ion conduction of lithium ions. However, when the bipolar current collector foil 941 has a large thickness, the energy density is reduced. The "energy density" refers to the capacity of a battery per unit area.

The present disclosure has been made in view of the above actual circumstances. The present disclosure provides a battery having excellent energy density and a method of producing the battery.

The present disclosure includes the following embodiments.

The battery according to the first aspect of the present disclosure includes a first unit battery and a second unit battery. The first unit battery and the second unit battery are stacked in the order of the first unit battery and the second unit battery along a stacking direction, the first unit battery has a first positive electrode layer, a first electrolyte layer, and a first negative electrode layer in the order of the first positive electrode layer, the first electrolyte layer, and the first negative electrode layer along the stacking direction, the second unit battery has a second positive electrode layer, a second electrolyte layer, and a second negative electrode layer in the order of the second positive electrode layer, the second electrolyte layer, and the second negative electrode layer along the stacking direction, and a first element serving as a carrier ion of the first unit battery is different from a second element serving as a carrier ion of the second unit battery.

In the present disclosure, the "positive electrode layer" refers to a layer that contains a positive electrode active material. The "negative electrode layer" may refer to a layer that contains a negative electrode active material. The "electrolyte layer" may refer to a layer that contains an electrolyte and contains no active material (that is, at least one of the positive electrode active material and the negative electrode active material). The "electrolyte" may refer to a substance that is interposed between the positive electrode layer and the negative electrode layer and conducts the carrier ion. Specific examples of the electrolyte include a solid electrolyte, a nonaqueous electrolytic solution that contains a lithium salt (such as LiPF₆), a nonaqueous gel electrolytic solution, and an ion conductive polymer. The "carrier ion" may refer to an ion that promotes the battery reaction by moving between the positive electrode layer and the negative electrode layer.

In the first aspect, the first element serving as the carrier ion of the first unit battery is different from the second element serving as the carrier ion of the second unit battery. Thus, even when no current collector is interposed between the first unit battery and the second unit battery, short circuits hardly occur. In addition, also when a current collector having a thickness (e.g., 5 µm) thinner than the conventional thickness (e.g., 10 µm to 20 µm) is interposed, short circuits hardly occur. As a result, the battery of the first aspect is a battery having excellent energy density.

In the battery according to the first aspect of the present disclosure, the first element may be an alkaline metal or an alkaline earth metal, and the second element may be an element that is different from an alkaline metal and an alkaline earth metal.

In the above battery, when a first electrode layer (that is, the first positive electrode layer or the first negative electrode layer) in a state where the bonding reaction of the carrier ion of the first unit battery (that is, the ion of an alkaline metal or an alkaline earth metal) occurs by the charge or discharge of the battery, is brought into contact with a second electrode layer (that is, the second negative electrode layer or the second positive electrode layer), the carrier ion of the first unit battery hardly moves to the second electrode layer. Similarly, when the second electrode layer (that is, the second positive electrode layer or the second negative electrode layer) in a state where the bonding reaction of the carrier ion of the second unit battery (that is, the ion of an element that is different from an alkaline metal and an alkaline earth metal) occurs by the charge or discharge of the battery, is brought into contact with the first electrode layer (that is, the first negative electrode layer or the first positive electrode layer), the carrier ion of the second unit battery hardly moves to the first electrode layer. As a result, the battery performance of the above battery is hardly reduced.

In the battery according to the first aspect of the present disclosure, the second element may contain fluorine.

In the above battery, when the second electrode layer (that is, the second positive electrode layer or the second negative electrode layer) in a state where the bonding reaction of the carrier ion of the second unit battery (that is, fluoride ions) occurs by the charge or discharge of the battery, is brought into contact with the first electrode layer (that is, the first negative electrode layer or the first positive electrode layer), the carrier ion of the second unit battery more hardly moves to the first electrode layer. As a result, the battery performance of the above battery is more hardly reduced.

In the battery according to the first aspect of the present disclosure, the first element may contain lithium, sodium, or magnesium.

In the above battery, when the first electrode layer (that is, the first positive electrode layer or the first negative electrode layer) in a state where the bonding reaction of the carrier ion of the first unit battery (that is, Li ions, Na ions, or Mg ions) occurs by the charge or discharge of the battery, is brought into contact with the second electrode layer (that is, the second negative electrode layer or the second positive electrode layer), the carrier ion of the first unit battery more hardly moves to the second electrode layer. As a result, the battery performance of the above battery is more hardly reduced.

In the battery according to the first aspect of the present disclosure, the first electrolyte layer may contain a first solid electrolyte, and the second electrolyte layer may contain a second solid electrolyte that is different from the first solid electrolyte.

The safety of the above battery is more excellent than the case where at least one of the first electrolyte layer and the second electrolyte layer contains a nonaqueous electrolytic solution.

In the battery according to the first aspect of the present disclosure, the ion conductivity of an ion of the first element in the first electrolyte layer may be higher than the ion conductivity of an ion of the second element in the first electrolyte layer, and the ion conductivity of the ion of the second element in the second electrolyte layer may be higher than the ion conductivity of the ion of the first element in the second electrolyte layer.

The ion conductivity of the ion of the first element and the ion conductivity of the ion of the second element are measured by the AC impedance method.

In the above battery, the first electrolyte layer selectively conducts the carrier ion of the first unit battery, and the second electrolyte layer selectively conducts the carrier ion of the second unit battery. As a result, the battery performance of the above battery is hardly reduced.

In the battery according to the first aspect of the present disclosure, the first unit battery and the second unit battery may be in contact with each other without interposing a current collector.

The energy density of the above battery is more excellent than the case where the battery includes a current collector.

In the battery according to the first aspect of the present disclosure, a current collector having a plurality of through-holes, the current collector being arranged between the first unit battery and the second unit battery may be further included.

The above battery may be produced by using, for example, the first unit battery formed on the current collector and the second unit battery formed on the current collector. The productivity of the above battery is more excellent than the case where the battery includes no current collector.

In the battery according to the first aspect of the present disclosure, the first solid electrolyte may contain at least one selected from the group consisting of a sulfide solid electrolyte, an oxide solid electrolyte, and a halide solid electrolyte, and the second solid electrolyte may contain at least one of a fluoride of a lanthanoid element, a fluoride of an alkaline metal element, and a fluoride of an alkaline earth metal element.

In the battery according to the first aspect of the present disclosure, among surfaces of the first unit battery perpendicular to the stacking direction, a surface closest to the second unit battery may be in contact with a surface of the second unit battery perpendicular to the stacking direction.

In the battery according to the first aspect of the present disclosure, among the surfaces of the first unit battery perpendicular to the stacking direction, all areas of the surface closest to the second unit battery may be in contact with the surface of the second unit battery perpendicular to the stacking direction, and among surfaces of the second unit battery perpendicular to the stacking direction, all areas of a surface closest to the first unit battery may be in contact with the surface of the first unit battery perpendicular to the stacking direction.

The method of producing the battery of the second aspect of the present disclosure that produces the battery according to the first aspect may include preparing a first positive electrode sheet constituting the first positive electrode layer, a first electrolyte sheet constituting the first electrolyte layer, a first negative electrode sheet constituting the first negative electrode layer, a second positive electrode sheet constituting the second positive electrode layer, a second electrolyte sheet constituting the second electrolyte layer, and a second negative electrode sheet constituting the second negative electrode layer, and stacking the first positive electrode sheet, the first electrolyte sheet, the first negative electrode sheet, the second positive electrode sheet, the second electrolyte sheet, and the second negative electrode sheet.

The above method of producing the battery can produce a battery having excellent energy density.

According to the present disclosure, a battery having excellent energy density and a method of producing the battery are provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a cross-sectional view of the battery of the first embodiment;
FIG. 2 is a cross-sectional view of the battery of the second embodiment of FIG. 1; and
FIG. 3 is a cross-sectional view of a conventional lithium ion secondary battery.

### DETAILED DESCRIPTION OF EMBODIMENTS

In the present disclosure, a numerical range indicated by using "to" means a range including the numerical values described before and after "to" as the minimum value and the maximum value. In a numerical range described in stages in the present disclosure, an upper limit value or a lower limit value described in a numerical range may be replaced with an upper limit value or a lower limit value in another numerical range that is described in stages. In the present disclosure, a combination of two or more preferred aspects is a more preferred aspect. In the present disclosure, the term "step" may include not only an independent step, but also a step that cannot be distinguished from other steps.

Hereinafter, the embodiments of the batteries of the present disclosure will be described with reference to the drawings. In the drawings, the same or corresponding parts are denoted with the same reference signs, and the descriptions thereof are omitted.

The battery in the present disclosure includes solid-state batteries using a solid electrolyte as the electrolyte and semi-solid-state batteries having a gel layer containing an electrolytic solution and a polymer between an electrode and a solid electrolyte, and the solid electrolyte may contain less than 10% by mass of an electrolytic solution based on the total amount of the electrolyte. The solid electrolyte may be a composite solid electrolyte that contains an inorganic-based solid electrolyte and a polymer electrolyte. Above all, a solid-state battery is preferable.

### 1 First Embodiment

### 1.1 Battery

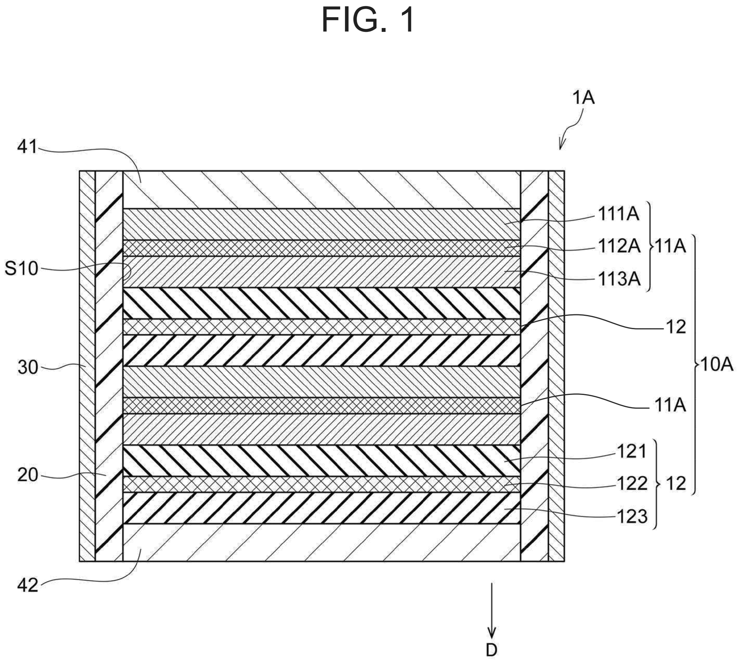

As shown in FIG. 1, the battery 1A includes an electrode stacked body 10A, a resin body 20, an outer package 30, a positive electrode terminal 41, and a negative electrode terminal 42.

The positive electrode terminal 41, the electrode stacked body 10A, and the negative electrode terminal 42 are stacked in the order presented along the stacking direction D. The resin body 20 covers the entire side surface S10 of the electrode stacked body 10A. The outer package 30 accommodates the electrode stacked body 10A. The electrode stacked body 10A is sealed by the resin body 20, the outer package 30, the positive electrode terminal 41, and the negative electrode terminal 42.

### 1.1.1 Power Generation Element

The electrode stacked body 10A functions as a power generation element of the battery 1A.

The electrode stacked body 10A includes a plurality of first unit batteries 11A and a plurality of second unit batteries 12. A first unit battery 11A, a second unit battery 12, a first unit battery 11A, and a second unit battery 12 are stacked in the order presented along the stacking direction D. That is, the first unit battery 11A and the second unit battery 12 are stacked in the order of the first unit battery 11A and the second unit battery 12 along the stacking direction D. The first unit battery 11A, the second unit battery 12, as well as the first unit battery 11A and the second unit battery 12 are electrically connected in series. The first unit battery 11A and the second unit battery 12 are in contact with each other without interposing a current collector. That is, among surfaces of the first unit battery 11A perpendicular to the stacking direction D, a surface closest to the second unit battery 12 may be in contact with a surface of the second unit battery 12 perpendicular to the stacking direction D. Further, among the surfaces of the first unit battery 11A perpendicular to the stacking direction D, all the areas of the surface closest to the second unit battery 12 may be in contact with the surface of the second unit battery 12 perpendicular to the stacking direction D, and among surfaces of the second unit battery 12 perpendicular to the stacking direction D, all the areas of a surface closest to the first unit battery 11A may be in contact with the surface of the first unit battery 11A perpendicular to the stacking direction D.

### 1.1.1.1 First Unit Battery

The first element serving as the carrier ion of the first unit battery 11A contains lithium (an example of the alkaline metal or the alkaline earth metal). That is, the first unit battery 11A is a lithium ion secondary battery.

The first unit battery 11A has a first positive electrode layer 111A, a first electrolyte layer 112A, and a first negative electrode layer 113A. The first positive electrode layer 111A, the first electrolyte layer 112A, and the first negative electrode layer 113A are stacked in the order presented along the stacking direction D. That is, the first unit battery 11A has the first positive electrode layer 111A, the first electrolyte layer 112A, and the first negative electrode layer 113A in the order of the first positive electrode layer 111A, the first electrolyte layer 112A, and the first negative electrode layer 113A along the stacking direction D.

### 1.1.1.1.1 First Positive Electrode Layer

The first positive electrode layer 111A contains a positive electrode active material that causes the desorption reaction of lithium ions during charging and the bonding reaction of lithium ions during discharging (hereinafter, also referred to as the "Li positive electrode active material"). The first positive electrode layer 111A may contain at least one of a solid electrolyte that conducts lithium ions (hereinafter, also referred to as the "Li solid electrolyte"), a conductive assistant, and a binder, if necessary.

The Li positive electrode active material preferably contains a lithium composite oxide. The lithium composite oxide may contain at least one selected from the group consisting of F, Cl, N, S, Br, and I. The lithium composite oxide may have a crystalline structure belonging to at least one space group selected from space groups R-3m, Immm, and P63-mmc. In the lithium composite oxide, the main arrangement of a transition metal, oxygen, and lithium may be an O2 structure. The lithium composite oxide may have a composition represented by the following general formula (1).

LiNiₓCo_{y}Mn_{z}O₂ ... Formula (1)

In the Formula (1), x, y, and z satisfy 0 < x < 1, 0 < y < 1, 0 < z < 1, and x + y + z = 1. The Li positive electrode active material may be a known positive electrode active material.

The Li solid electrolyte preferably contains one selected from the group consisting of a sulfide solid electrolyte, an oxide solid electrolyte, and a halide solid electrolyte. The Li solid electrolyte may be a known solid electrolyte. At least a part of the surface of the Li positive electrode active material is preferably covered with a sulfide solid electrolyte, an oxide solid electrolyte, or a halide solid electrolyte.

The sulfide solid electrolyte preferably contain a sulfur (S) element as the main component of the anion element, and preferably further contain, for example, a lithium (Li) element and an A element, in addition to the S element. The A element is at least one selected from the group consisting of P, As, Sb, Si, Ge, Sn, B, Al, Ga, and In. The sulfide solid electrolyte may further contain at least one of O and a halogen element. Examples of the halogen element (X) include F, Cl, Br, and I. Examples of the composition of the sulfide solid electrolyte include, but are not particularly limited to, xLi₂S·(100-x)P₂S₅ (70 ≤ x ≤ 80), and yLiI·zLiBr·(100-y-z)(xLi₂S·(1-x)P₂S₅) (0.7 ≤ x ≤ 0.8, 0 ≤ y ≤ 30, 0 ≤ z ≤ 30). The sulfide solid electrolyte may have a composition represented by the following general formula (2).

Li₄₋ₓGe₁₋ₓPₓS₄ (0 < x < 1) ... Formula (2)

In the Formula (2), at least some Ge may be substituted with at least one selected from the group consisting of Sb, Si, Sn, B, Al, Ga, In, Ti, Zr, V, and Nb. In addition, at least some P may be substituted with at least one selected from the group consisting of Sb, Si, Sn, B, Al, Ga, In, Ti, Zr, V, and Nb. At least some Li may be substituted with at least one selected from the group consisting of Na, K, Mg, Ca, and Zn. At least some S may be substituted with a halogen. The halogen is at least one of F, Cl, Br, and I.

The sulfide solid electrolyte may contain, for example, at least one selected from the group consisting of Li₇P₃S₁₁, Li_{3.25}P_{0.95}S₄, Li₆PS₅Cl, LiI, B₂S₃, Li₂S, and Si₂S₂.

The halide solid electrolyte may have a composition (LTAF) represented by the following general formula (3).

Li_{6-(4-x)b}(Ti₁₋ₓAlₓ)_{b}F₆ (0 < x < 1, 0 < b ≤ 1.5) ... Formula (3)

Examples of the conductive assistant include carbon materials (such as carbon black, carbon nanotube, and carbon fluoride), metals (such as aluminum powder and conductive whisker), and conductive polymer materials (such as polyaniline, polypyrrole, and polythiophene).

Examples of the binder include halogenated vinyl resins (such as polyvinylidene fluoride (PVdF)), rubbers (such as acrylate butadiene rubber (ABR) and styrene-butadiene rubber (SBR)), and polyolefin resins (such as polyethylene (PE) and polypropylene (PP)).

### 1.1.1.1.2 First Electrolyte Layer

The first electrolyte layer 112A contains the Li solid electrolyte (an example of the first solid electrolyte) that conducts lithium ions, and may further contain a binder, if necessary. The Li solid electrolyte is not particularly limited, and may be an aggregate of a plurality of particles. The Li solid electrolyte preferably contains one selected from the group consisting of a sulfide solid electrolyte, an oxide solid electrolyte, and a halide solid electrolyte. Examples of the sulfide solid electrolyte include the same as those exemplified as the sulfide solid electrolyte of the first positive electrode layer 111A. The Li solid electrolyte may be a known solid electrolyte. The first solid electrolyte may contain at least one selected from the group consisting of the sulfide solid electrolyte, the oxide solid electrolyte, and the halide solid electrolyte.

The binder may be used to bond the Li solid electrolytes. The binder may be used to bond the Li solid electrolyte with the first positive electrode layer 111A or the first negative electrode layer 113A. Examples of the binder include the same as those exemplified as the binder of the first positive electrode layer 111A.

### 1.1.1.1.3 First Negative Electrode Layer

The first negative electrode layer 113A contains a negative electrode active material that causes the bonding reaction of lithium ions during charging and the desorption reaction of lithium ions during discharging (hereinafter, also referred to as the "Li negative electrode active material"). The first negative electrode layer 113A may contain at least one of a Li solid electrolyte, a conductive assistant, and a binder, if necessary.

Examples of the Li negative electrode active material include Li-based active materials (such as metal lithium), carbon-based active materials (such as graphite and hard carbon), oxide-based active materials (such as lithium titanate), and Si-based active materials (such as a Si simple substance).

Examples of the Li solid electrolyte include the same as those exemplified as the Li solid electrolyte of the first positive electrode layer 111A. At least a part of the surface of Li negative electrode active material is preferably covered with a sulfide solid electrolyte, an oxide solid electrolyte, or a halide solid electrolyte. Examples of the conductive assistant include the same as those exemplified as the conductive assistant of the first positive electrode layer 111A. Examples of the binder include the same as those exemplified as the binder of the first positive electrode layer 111A.

### 1.1.1.2 Second Unit Battery

The second element serving as the carrier ion of the second unit battery 12 contains fluorine (an example of an element that is different from an alkaline metal and an alkaline earth metal). That is, the second unit battery 12 is a fluoride ion secondary battery.

The second unit battery 12 has a second positive electrode layer 121, a second electrolyte layer 122, and a second negative electrode layer 123. The second positive electrode layer 121, the second electrolyte layer 122, and the second negative electrode layer 123 are stacked in the order presented along the stacking direction D. That is, the second unit battery 12 has the second positive electrode layer 121, the second electrolyte layer 122, and the second negative electrode layer 123 in the order of the second positive electrode layer 121, the second electrolyte layer 122, and the second negative electrode layer 123 along the stacking direction D.

### 1.1.1.2.1 Second Positive Electrode Layer

The second positive electrode layer 121 contains a positive electrode active material that causes the bonding reaction of fluoride ions during charging and the desorption reaction of fluoride ions during discharging (hereinafter, also referred to as the "F positive electrode active material"). The positive electrode layer 121 may contain at least one of a solid electrolyte that conducts fluoride ions (hereinafter, also referred to as the "F solid electrolyte"), a conductive assistant, and a binder, if necessary.

Examples of the F positive electrode active material include metal simple substances, alloys, metal oxides, and fluorides thereof. Examples of the metal element contained in the F positive electrode active material include Cu, Ag, Ni, Co, Pb, Ce, Mn, Au, Pt, Rh, V, Os, Ru, Fe, Cr, Bi, Nb, Sb, Ti, Sn, and Zn. Among them, the F positive electrode active material is preferably Cu, CuFz, Fe, FeFz, Ag, or AgFz. The above z is a real number larger than 0.

Examples of the F positive electrode active material include polymer materials. Examples of the polymer material include polyaniline, polypyrrole, polyacetylene, and polythiophene.

Examples of the F positive electrode active material include metal sulfides. Examples of the metal sulfide include Cu2S, CuS, FeS, and FeS₂. The F positive electrode active material may be a known positive electrode active material.

Examples of the F solid electrolyte include fluorides of lanthanoid elements (such as La and Ce), fluorides of alkaline metal elements (such as Li, Na, K, Rb, and Cs), and fluorides of alkaline earth metal elements (such as Ca, Sr, and Ba). The F solid electrolyte may be a fluoride that contains a plurality of kinds of lanthanoid elements, alkaline metal elements, and alkaline earth metal elements.

Examples of the F solid electrolyte include La₍₁₋ₓ₎BaₓF₍₃₋ₓ₎ (0 ≤ x ≤ 2), Pb₍₂₋ₓ₎SnₓF₄ (0 ≤ x ≤ 2), Ca₍₂₋ₓ₎BaₓF₄ (0 ≤ x ≤ 2), and Ce₍₁₋ₓ₎BaₓF₍₃₋ₓ₎ (0 ≤ x ≤ 2). The F solid electrolyte may be a known solid electrolyte.

Examples of the conductive assistant include the same as those exemplified as the conductive assistant of the first positive electrode layer 111A. Examples of the binder include the same as those exemplified as the binder of the first positive electrode layer 111A.

### 1.1.1.2.2 Second Electrolyte Layer

The second electrolyte layer 122 contains a F solid electrolyte that conducts fluoride ions (an example of the second solid electrolyte). Examples of the F solid electrolyte include the same as those exemplified as the F solid electrolyte of the second positive electrode layer 121. The second solid electrolyte may contain at least one of a fluoride of a lanthanoid element, a fluoride of an alkaline metal element, and a fluoride of an alkaline earth metal element.

The F solid electrolyte layer may further contain a binder. The binder may be used to bond the F solid electrolytes. The binder may be used to bond the F solid electrolyte with the second positive electrode layer 121 or the second negative electrode layer 123. Examples of the binder include the same as those exemplified as the binder of the first positive electrode layer 111A.

### 1.1.1.2.3 Second Negative Electrode Layer

The second negative electrode layer 123 contains a negative electrode active material that causes the desorption reaction of fluoride ions during charging and the bonding reaction of fluoride ions during discharging (hereinafter, also referred to as the "F negative electrode active material"). The second negative electrode layer 123 may contain at least one of a F solid electrolyte, a conductive assistant, and a binder, if necessary.

As the F negative electrode active material, an arbitrary active material having a lower potential than that of the F positive electrode active material may be selected. Examples of the F negative electrode active material include fluorides of metal simple substances, alloys, and metal oxides. Examples of the metal element contained in the negative electrode active material include La, Ca, Al, Eu, Li, Si, Ge, Sn, In, V, Cd, Cr, Fe, Zn, Ga, Ti, Nb, Mn, Yb, Zr, Sm, Ce, Mg, and Pb. Among them, the negative electrode active material is preferably MgFₓ, AlFₓ, LaFₓ, CeFₓ, CaFₓ, or PbFₓ. The above x is a real number larger than 0. The F negative electrode active material may be a known negative electrode active material.

Examples of the F solid electrolyte include the same as those exemplified as the F solid electrolyte of the second positive electrode layer 121. Examples of the conductive assistant include the same as those exemplified as the conductive assistant of the first positive electrode layer 111A. Examples of the binder include the same as those exemplified as the binder of the first positive electrode layer 111A.

### 1.1.1.2.4 Preferred Aspect

The ion conductivity of lithium ions (an example of the ion of the first element) in the first electrolyte layer 112A is preferably higher than the ion conductivity of fluoride ions (an example of the ion of the second element) in the first electrolyte layer 112A, and the ion conductivity of fluoride ions in the second electrolyte layer 122 is preferably higher than the ion conductivity of lithium ions in the second electrolyte layer 122.

Such a combination of the first electrolyte layer 112A and the second electrolyte layer 122 may be achieved by adjusting the kind of Li solid electrolyte of the first electrolyte layer 112A and the kind of F solid electrolyte of the second electrolyte layer 122. Examples thereof include a case where the Li solid electrolyte of the first electrolyte layer 112A is Li₆PS₅Cl, and the F solid electrolyte of the second electrolyte layer 122 is La₍₁₋ₓ₎BaₓF₍₃₋ₓ₎ (0 ≤ x ≤ 2) (e.g., La_{0.9}Ba_{0.1}F_{2.9}).

From the viewpoint of improving the battery performance of the battery 1A, the Li positive electrode active material and the Li negative electrode active material preferably cause no bonding reaction of fluoride ions during charging or discharging, and the F positive electrode active material and the F negative electrode active material preferably cause no the bonding reaction of lithium ions during charging or discharging. Examples thereof include a case where the Li positive electrode active material is a lithium composite oxide represented by the formula (1) (e.g., LiNi_{1/3}Co_{1/3}Mg_{1/3}O₂), the Li negative electrode active material is graphite, the F positive electrode active material is Cu, and the F negative electrode active material is AlF₃.

### 1.1.2 Resin Body

The resin body 20 prevents the occurrence of short circuits of the electrode stacked body 10A. Specifically, the resin body 20 prevents the occurrence of short circuits between at least one of the first positive electrode layer 111A and the second positive electrode layer 121 and at least one of the first negative electrode layer 113A and the second negative electrode layer 123.

The shape and size of the resin body 20 are not particularly limited, and are arbitrarily selected depending on the applications and the like of the battery 1A. The material of the resin body 20 is not particularly limited, as long as it is a resin that can prevent the occurrence of short circuits of the electrode stacked body 10A, and may be a known resin (such as a thermoplastic resin and a thermosetting resin). The thermoplastic resin may be an elastomer.

### 1.1.3 Outer Package

The outer package 30 accommodates the electrode stacked body 10A, the resin body 20, the positive electrode terminal 41, and the negative electrode terminal 42. The shape and size of the outer package 30 are not particularly limited, and are arbitrarily selected depending on the applications and the like of the battery 1A. Examples of the outer package 30 include laminate outer packages and metal cans (such as square, cylindrical, and coin-shaped metal cans).

### 1.1.4 Positive Electrode Terminal

The positive electrode terminal 41 is used to lead out the electricity generated in the electrode stacked body 10A to the outside of the battery 1A. The shape and size of the positive electrode terminal 41 are arbitrarily selected depending on the applications and the like of the battery 1A. Examples of the material of the positive electrode terminal 41 include metals (such as stainless steel, aluminum, copper, nickel, iron, titanium, carbon, and aluminum alloys).

### 1.1.5 Negative Electrode Terminal

The negative electrode terminal 42 is used to lead out the electricity generated in the electrode stacked body 10A to the outside of the battery 1A. The shape and size of the negative electrode terminal 42 are arbitrarily selected depending on the applications and the like of the battery 1A. Examples of the material of the negative electrode terminal 42 include metals (such as stainless steel, aluminum, copper, nickel, iron, titanium, and carbon).

### 1.1.6 Application

Examples of the applications of the battery 1A include power sources for electrical equipment (such as vehicles, electronic equipment, and electricity storage). Examples of the vehicle include electric four-wheel vehicles, electric motorcycles, gasoline automobiles, and diesel automobiles. Examples of the electric four-wheel vehicle include battery electric vehicles (BEV), plug-in hybrid electric vehicles (PHEV), fuel cell electric vehicles (FCEV), and hybrid electric vehicles (HEV). Examples of the electric two-wheelers include electric motorcycles, and electric assist bicycles. Examples of the electronic device include hand-held equipment (such as smartphones, tablet computers, and audio players), transportable equipment (such as notebook computers and compact disc (CD) players), and movable equipment (such as electric tools and industrial video cameras). Among them, the application of the battery 1A is preferably a power source for driving a hybrid electric vehicle, a plug-in hybrid electric vehicle, or a battery electric vehicle.

### 1.2 Method of Producing Battery

The method of producing the battery of the first embodiment is a method of producing the battery 1A. The method includes a preparation step, a stacking step, a resin body formation step, and a sealing step. The preparation step, the stacking step, the resin body formation step, and the sealing step may be conducted in the order presented.

### 1.2.1 Preparation Step

In the preparation step, a first positive electrode sheet constituting the first positive electrode layer 111A, a first electrolyte sheet constituting the first electrolyte layer 112A, a first negative electrode sheet constituting the first negative electrode layer 113A, a second positive electrode sheet constituting the second positive electrode layer 121, a second electrolyte sheet constituting the second electrolyte layer 122, and a second negative electrode sheet constituting the second negative electrode layer 123 are prepared.

The first positive electrode sheet, the first electrolyte sheet, the first negative electrode sheet, the second positive electrode sheet, the second electrolyte sheet, and the second negative electrode sheet are sheet-like processed products (that is, independent sheets).

The method of preparing the first positive electrode sheet, the first electrolyte sheet, the first negative electrode sheet, the second positive electrode sheet, the second electrolyte sheet, and the second negative electrode sheet is only required to be a known method.

In the preparation step, a positive electrode terminal sheet constituting the positive electrode terminal 41 and a negative electrode terminal sheet constituting the negative electrode terminal 42 may be further prepared. The method of preparing the positive electrode terminal sheet and the negative electrode terminal sheet is only required to be a known method.

### 1.2.2 Stacking Step

In the stacking step, the first positive electrode sheet, the first electrolyte sheet, the first negative electrode sheet, the second positive electrode sheet, the second electrolyte sheet, and the second negative electrode sheet are stacked. Specifically, in the first embodiment, the positive electrode terminal sheet, the first positive electrode sheet, the first electrolyte sheet, the first negative electrode sheet, the second positive electrode sheet, the second electrolyte sheet, the second negative electrode sheet, the first positive electrode sheet, the first electrolyte sheet, the first negative electrode sheet, the second positive electrode sheet, the second electrolyte sheet, the second negative electrode sheet, and the negative electrode terminal sheet are stacked in the order presented along the stacking direction D. Consequently, a first half-finished product is obtained. The first half-finished product has the positive electrode terminal 41, the electrode stacked body 10A, and the negative electrode terminal 42 in the order presented along the stacking direction D.

The stacking method is not particularly limited, and is only required to be a known method.

### 1.2.3 Resin Body Formation Step

In the resin body formation step, the resin body 20 is formed on the entire side surface of the first half-finished product. Consequently, a second half-finished product is obtained. The second half-finished product has the same structure as the battery 1A, except for having no outer package 30.

The method of preparing the material of the resin body 20 and the method of forming the resin body 20 are not particularly limited, and may be known methods. The material of the resin body 20 may be a sheet-like processed product (that is, an independent sheet) or a paste-like material.

### 1.2.4 Sealing Step

In the sealing step, the second half-finished product is arranged in the outer package 30, and the electrode stacked body 10A is sealed. Consequently, the battery 1A is obtained.

The method of preparing the outer package 30, the arrangement method, and the sealing method are not particularly limited, and are only required to be known methods.

### 1.3 Function and Effect

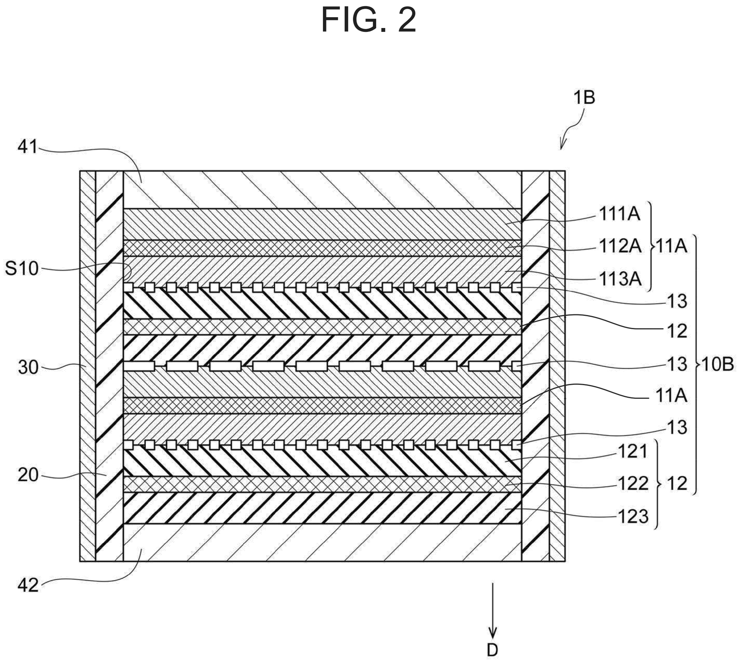

As described with reference to FIG. 1 and FIG. 2, the battery 1A has the first unit battery 11A and the second unit battery 12 in the order presented along the stacking direction D. The first unit battery 11A has the first positive electrode layer 111A, the first electrolyte layer 112A, and the first negative electrode layer 113A in the order presented along the stacking direction D. The second unit battery 12 has the second positive electrode layer 121, the second electrolyte layer 122, and the second negative electrode layer 123 in the order presented along the stacking direction D. The first element (that is, lithium) serving as the carrier ion of the first unit battery 11A is different from the second element (that is, fluorine) serving as the carrier ion of the second unit battery 12.

Even when no current collector is interposed between the first unit battery 11A and the second unit battery 12, short circuits hardly occur. As a result, the battery 1A is a battery having excellent energy density.

As described with reference to FIG. 1 and FIG. 2, the first element (that is, lithium) is an alkaline metal or an alkaline earth metal, and the second element (that is, fluorine) is an element that is different from an alkaline metal and an alkaline earth metal, in the battery 1A.

When the first electrode layer (that is, the first positive electrode layer 111A or the first negative electrode layer 113A) in a state where the bonding reaction of the carrier ion of the first unit battery (that is, lithium ions) occurs by the charge or discharge of the battery 1A, is brought into contact with the second electrode layer (that is, the second negative electrode layer 123 or the second positive electrode layer 121), the carrier ion of the first unit battery 11A hardly moves to the second electrode layer. Similarly, when the second electrode layer (that is, the second positive electrode layer 121 or the second negative electrode layer 123) in a state where the bonding reaction of the carrier ion of the second unit battery (that is, fluoride ions) occurs by the charge or discharge of the battery 1A, is brought into contact with the first electrode layer (that is, the first negative electrode layer 113A or the first positive electrode layer 111A), the carrier ion of the second unit battery 12 hardly moves to the first electrode layer. As a result, the battery performance of the battery 1A is hardly reduced.

As described with reference to FIG. 1 and FIG. 2, the second element contains fluorine in the battery 1A.

Consequently, the battery performance of the battery 1A is more hardly reduced.

As described with reference to FIG. 1 and FIG. 2, the first element contains lithium in the battery 1A.

Consequently, the battery performance of the battery 1A is more hardly reduced.

As described with reference to FIG. 1 and FIG. 2, the first electrolyte layer 112A contains the first solid electrolyte, and the second electrolyte layer 122 contains the second solid electrolyte that is different from the first solid electrolyte, in the battery 1A.

Consequently, the safety of the battery 1A is more excellent than the case where at least one of the first electrolyte layer 112A and the second electrolyte layer 122 contains a nonaqueous electrolytic solution.

As described with reference to FIG. 1 and FIG. 2, the ion conductivity of lithium ions in the first electrolyte layer 112A is preferably higher than the ion conductivity of fluoride ions in the first electrolyte layer 112A, and the ion conductivity of fluoride ions in the second electrolyte layer 122 is preferably higher than the ion conductivity of lithium ions in the second electrolyte layer 122 in the battery 1A.

In the battery 1A, the first electrolyte layer 112A selectively conducts lithium ions, and the second electrolyte layer 122 selectively conducts fluoride ions. As a result, the battery performance of the battery 1A is hardly reduced.

As described with reference to FIG. 1 and FIG. 2, the first unit battery 11A and the second unit battery 12 are in contact with each other without interposing a current collector in the battery 1A.

The energy density of the battery 1A is more excellent than the case where the battery 1A includes a current collector.

As described with reference to FIG. 1 and FIG. 2, the method of producing the battery of the first embodiment includes a preparation step and a stacking step.

The method of producing the battery of the first embodiment can produce the battery 1A having excellent energy density.

### 2 Second Embodiment

### 2.1 Battery

The battery 1B according to the second embodiment is the same as the battery 1A according to the first embodiment except for having a current collector having a plurality of through-holes.

As shown in FIG. 2, the battery 1B includes an electrode stacked body 10B, a resin body 20, an outer package 30, a positive electrode terminal 41, and a negative electrode terminal 42.

The electrode stacked body 10B includes a plurality of first unit batteries 11A, a plurality of second unit batteries 12, and a current collector having a plurality of through-holes 13. The first unit battery 11A, the current collector 13, the second unit battery 12, the current collector 13, the first unit battery 11A, the current collector 13, and the second unit battery 12 are stacked in the order presented along the stacking direction D. The first unit battery 11A, the second unit battery 12, as well as the first unit battery 11A and the second unit battery 12 are electrically connected in series. The current collector 13 is arranged between the first unit battery 11A and the second unit battery 12.

The current collector 13 supports the first unit battery 11A or the second unit battery 12. The shape of the current collector 13 may be a foil shape. The size of the through-holes of the current collector 13 may be a size such that the first unit battery 11A and the second unit battery 12 are physically brought into contact with each other. The shape of the through-holes of the current collector 13 is not particularly limited, and is arbitrarily selected depending on the application of the battery 1A. The thickness of the current collector 13 may be less than 10 µm, and for example, may be 5 µm. Examples of the current collector 13 include current collector mesh foils and current collector foils having a thin thickness (e.g., less than 10 µm). The current collector foil having a thin thickness (e.g., less than 10 µm) usually has through-holes.

### 2.2 Function and Effect

The battery 1B is the same as the battery 1A except that the electrode stacked body 10B has the current collector 13. Thus, the battery 1B has the same functions and effects as those of the battery 1A.

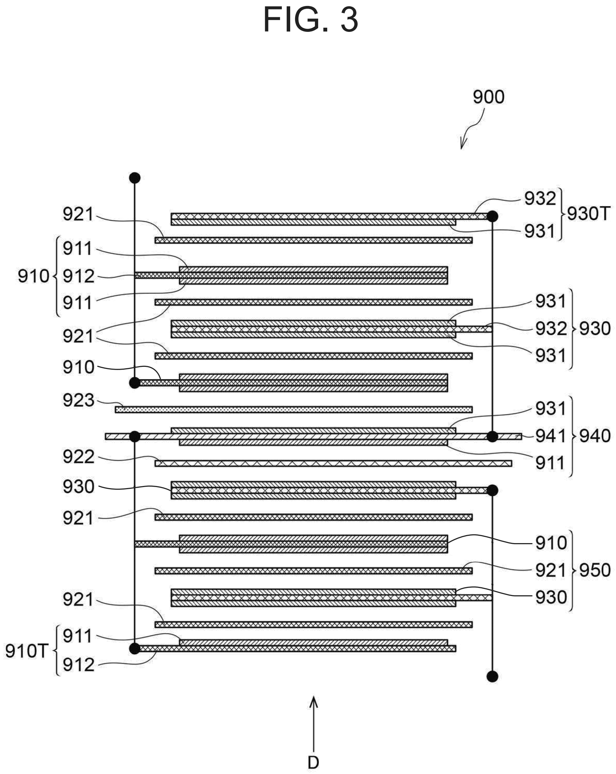

As described with reference to FIG. 3, the battery 1B further has the current collector 13.

The battery 1B may be produced by using, for example, the first unit battery 11A formed on the current collector 13 and the second unit battery 12 formed on the current collector 13. The productivity of the battery 1B is more excellent than the case where the battery 1B includes no current collector 13.

### 3 Third Embodiment

### 3.1 Battery

The battery according to the third embodiment is the same as the battery 1A according to the first embodiment, except that the first element serving as the carrier ion of the first unit battery is sodium.

The battery includes an electrode stacked body, a resin body 20, an outer package 30, a positive electrode terminal 41, and a negative electrode terminal 42. The electrode stacked body includes a plurality of first unit batteries and a plurality of second unit batteries 12.

### 3.1.1 First Unit Battery

The first element serving as the carrier ion of the first unit battery contains sodium (an example of the alkaline metal or the alkaline earth metal). That is, the first unit battery is a sodium ion secondary battery.

The first unit battery has a first positive electrode layer, a first electrolyte layer, and a first negative electrode layer. The first positive electrode layer, the first electrolyte layer, and the first negative electrode layer are stacked in the order presented along the stacking direction D.

### 3.1.1.1 First Positive Electrode Layer

The first positive electrode layer is the same as the first positive electrode layer 111A of the first embodiment, except that the first element serving as the carrier ion is sodium.

The first positive electrode layer contains a positive electrode active material that causes the desorption reaction of sodium ions during charging and the bonding reaction of sodium ions during discharging (hereinafter, also referred to as the "Na positive electrode active material"). The first positive electrode layer may contain at least one of a solid electrolyte that conducts sodium ions (hereinafter, also referred to as the "Na solid electrolyte"), a conductive assistant, and a binder, if necessary.

The Na positive electrode active material preferably contains a composite oxide that contains Na. The "composite oxide that contains Na" refers to an oxide that contains a metal element other than Na (such as a transition metal element) and/or a non-metal element (such as P or S) in addition to Na. Examples of the Na positive electrode active material include layered compounds, spinel compounds, and polyanionic compounds. Specific examples of the layered compound and the spinel compound include NaₓMO₂ (0 < x ≤ 1, M is at least one or more of Fe, Ni, Co, Mn, V, and Cr). Examples of the polyanionic compound include Na₃V₂(PO₄)₃, Na₂Fe₂(SO₄)₃, NaFePO₄, NaFeP₂O₇, Na₂MP₂O₇ (M is at least one or more of Fe, Ni, Co, and Mn), Na₄M₃(PO₄)₂P₂O₇ (M is at least one or more of Fe, Ni, Co, and Mn). The Na positive electrode active material may be a known positive electrode active material.

The Na solid electrolyte preferably contains one selected from the group consisting of a sulfide solid electrolyte, an oxide solid electrolyte, a boride solid electrolyte and a fluoride solid electrolyte. Examples of the sulfide solid electrolyte include Na₃PS₄, Na₃SbS₄, and Na_{2.88}Sb_{0.88}W_{0.12}S₄. Examples of the oxide solid electrolyte include Na₃Zr₂PSi₂O₁₂ and Na₂O-11Al₂O₃. Examples of the boride solid electrolyte include NaBH₄, NaB₁₀H₁₀, NaCB₉H₁₀, NaCB₁₁H₁₂, and NaB₁₂Cl₁₂. Examples of the fluoride solid electrolyte include NaPF₆ and NaBF₄.

### 3.1.1.2 First Electrolyte Layer

The first electrolyte layer is the same as the first electrolyte layer 112A of the first embodiment, except that the first element serving as the carrier ion is sodium.

The first electrolyte layer contains an Na solid electrolyte (an example of the first solid electrolyte) that conducts sodium ions, and may further contain a binder, if necessary. The Na solid electrolyte is not particularly limited, and may be an aggregate of a plurality of particles. Examples of the Na solid electrolyte include the same as those exemplified as the Na solid electrolyte of the first positive electrode layer. The Na solid electrolyte may be a known solid electrolyte.

### 3.1.1.3 First Negative Electrode Layer

The first negative electrode layer is the same as the first negative electrode layer 113A of the first embodiment, except that the first element serving as the carrier ion is sodium.

The first negative electrode layer contains a negative electrode active material that causes the bonding reaction of sodium ions during charging and the desorption reaction of sodium ions during discharging (hereinafter, also referred to as the "Na negative electrode active material"). The first negative electrode layer may contain at least one of a Na solid electrolyte, a conductive assistant, and a binder, if necessary.

Examples of the Na negative electrode active material include Na-based active materials (such as metal sodium), carbon-based active materials (such as graphite and hard carbon), oxide-based active materials (such as sodium titanate), and Na-based active materials (such as a Na simple substance).

### 3.1.1.4 Preferred Aspect

The ion conductivity of sodium ions (an example of the ion of the first element) in the first electrolyte layer is preferably higher than the ion conductivity of fluoride ions (an example of the ion of the second element) in the first electrolyte layer 112A, and the ion conductivity of fluoride ions in the second electrolyte layer 122 is preferably higher than the ion conductivity of lithium ions in the second electrolyte layer 122.

Such a combination of the first electrolyte layer and the second electrolyte layer 122 may be achieved by adjusting the kind of Na solid electrolyte of the first electrolyte layer 112A and the kind of F solid electrolyte of the second electrolyte layer 122. Examples thereof include a case where the Na solid electrolyte of the first electrolyte layer is NaPS₄, and the F solid electrolyte of the second electrolyte layer 122 is La₍₁₋ₓ₎BaₓF₍₃₋ₓ₎ (0 ≤ x ≤ 2) (e.g., La_{0.9}Ba_{0.1}F_{2.9}).

From the viewpoint of improving the battery performance of the battery, the Na positive electrode active material and the Na negative electrode active material preferably cause no bonding reaction of fluoride ions during charging or discharging, and the F positive electrode active material and the F negative electrode active material preferably cause no bonding reaction of sodium ions during charging or discharging. Examples thereof include a case where the Na positive electrode active material is a lithium composite oxide (e.g., NaxMO₂ (0 < x ≤ 1, M is at least one or more of Fe, Ni, Co, Mn, V, and Cr)) represented by the formula (1), the Na negative electrode active material is hard carbon, the F positive electrode active material is Cu, and the F negative electrode active material is AlF₃.

### 3.2 Function and Effect

The battery is the same as the battery 1A, except that the first element is sodium. Thus, the battery has the same functions and effects as those of the battery 1A.

### 4 Fourth Embodiment

### 4.1 Battery

The battery according to the fourth embodiment is the same as the battery 1A according to the first embodiment, except that the first element serving as the carrier ion of the first unit battery is magnesium.

The battery includes an electrode stacked body, a resin body 20, an outer package 30, a positive electrode terminal 41, and a negative electrode terminal 42. The electrode stacked body includes a plurality of first unit batteries and a plurality of second unit batteries 12.

### 4.1.1 First Unit Battery

The first element serving as the carrier ion of the first unit battery contains magnesium (an example of the alkaline metal or the alkaline earth metal). That is, the first unit battery is a magnesium ion secondary battery.

The first unit battery has a first positive electrode layer, a first electrolyte layer, and a first negative electrode layer. The first positive electrode layer, the first electrolyte layer, and the first negative electrode layer are stacked in the order presented along the stacking direction D.

### 4.1.1.1 First Positive Electrode Layer

The first positive electrode layer is the same as the first positive electrode layer 111A of the first embodiment, except that the first element serving as the carrier ion is magnesium.

The first positive electrode layer contains a positive electrode active material that causes the desorption reaction of magnesium ions during charging and the bonding reaction of magnesium ions during discharging (hereinafter, also referred to as the "Mg positive electrode active material"). The first positive electrode layer may contain at least one of a conductive assistant and a binder, if necessary.

Examples of the Mg positive electrode active material include MgCo₂O₄, MgFeSiO₄, S, MnO₂, Mo₆S₈, and V₂O₅.

### 4.1.1.2 First Electrolyte Layer

The first electrolyte layer is the same as the first electrolyte layer 112A of the first embodiment, except that the first element serving as the carrier ion is magnesium.

The first electrolyte layer contains a Mg solid electrolyte (an example of the first solid electrolyte) that conducts magnesium ions, and may further contain a binder, if necessary. Examples of the Mg solid electrolyte include Mg_{2-1.5x}AlₓSiO₄, Mg2_{-1.5y}-_{0.5z}Al_{y-z}Zn_{z}SiO₄, MgZr₄(PO₄)₆, MgM1PO₄, Mg₁₋ₐM₂ₐM3(M4O₄)₃, and Mg(BH₄)(NH₂). x satisfies the condition of 0.1 ≤ x ≤ 1. y satisfies the condition of 0.5 ≤ y ≤ 1. z satisfies the condition of 0.5 ≤ z ≤ 0.9. y - z satisfies the condition of y - z ≥ 0. y + z satisfies the condition of y + z ≤ 1. M1 is at least one element selected from the group consisting of Zr, Nb, and Hf. M2 is at least one element selected from the group consisting of Ca, Sr, Ba, and Ra. M3 is at least one element selected from the group consisting of Zr and Hf. M4 is at least one element selected from the group consisting of W and Mo. a satisfies the condition of 0 ≤ a < 1. The Mg solid electrolyte may be a known solid electrolyte.

### 4.1.1.3 First Negative Electrode Layer

The first negative electrode layer is the same as the first negative electrode layer 113A of the first embodiment, except that the first element serving as the carrier ion is magnesium.

The first negative electrode layer contains a negative electrode active material that causes the bonding reaction of magnesium ions during charging and the desorption reaction of magnesium ions during discharging (hereinafter, also referred to as the "Mg negative electrode active material"). The first negative electrode layer may contain at least one of a conductive assistant and a binder, if necessary.

Examples of the Mg negative electrode active material include metals (such as magnesium, tin, bismuth, and antimony), and alloys. The alloy is, for example, an alloy of magnesium and at least one selected from aluminum, silicon, gallium, zinc, tin, manganese, bismuth, and antimony.

### 4.2 Function and Effect

The battery is the same as the battery 1A, except that the first element is magnesium. Thus, the battery has the same functions and effects as those of the battery 1A.

### 5 Modified Example

In the first embodiment and the second embodiment, the first element is lithium, and the second element is fluorine. In the third embodiment, the first element is sodium, and the second element is fluorine. In the fourth embodiment, the first element is magnesium, and the second element is fluorine. The present disclosure is not limited thereto. The first element may be an alkaline metal (such as lithium, sodium, or potassium) or an alkaline earth metal (such as beryllium, magnesium, or calcium), and may contain lithium, sodium, or magnesium. The second element may be an element that is different from an alkaline metal and an alkaline earth metal.

In the first embodiment and the second embodiment, the first electrolyte layer 112A contains the Li solid electrolyte, and the second electrolyte layer 122 contains the F solid electrolyte. In the third embodiment, the first electrolyte layer contains the Na solid electrolyte, the second electrolyte layer 122 contains the F solid electrolyte. In the fourth embodiment, the first electrolyte layer contains the Mg solid electrolyte, and the second electrolyte layer 122 contains the F solid electrolyte. The present disclosure is not limited thereto. The first electrolyte layer and the second electrolyte layer may contain at least one of a nonaqueous electrolytic solution that contains a lithium salt (such as LiPF₆), a nonaqueous gel electrolytic solution, and an ion conductive polymer.

In the first embodiment and the second embodiment, the ion conductivity of lithium ions in the first electrolyte layer 112A is preferably higher than the ion conductivity of fluoride ions in the first electrolyte layer 112A, and the ion conductivity of fluoride ions in the second electrolyte layer 122 is preferably higher than the ion conductivity of lithium ions in the second electrolyte layer 122, but the present disclosure is not limited thereto. The ion conductivity of the ion of the first element in the first electrolyte layer may be the same as the ion conductivity of the ion of the second element in the first electrolyte layer. The ion conductivity of the ion of the second element in the second electrolyte layer may be the same as the ion conductivity of the ion of the first element in the second electrolyte layer.

In the first embodiment, the number of the first unit batteries 11A is two, and the number of the second unit batteries 12 is two, but the present disclosure is not limited thereto. The number of the first unit batteries may be one, or may be three or more. The number of the second unit batteries may be one, or may be three or more.

## Claims

1. A battery (1A; 1B), comprising:
a first unit battery (11A); and
a second unit battery (12), wherein:
the first unit battery (11A) and the second unit battery (12) are stacked in the order of the first unit battery (11A) and the second unit battery (12) along a stacking direction (D),
the first unit battery (11A) has a first positive electrode layer (111A), a first electrolyte layer (112A), and a first negative electrode layer (113A) in the order of the first positive electrode layer (111A), the first electrolyte layer (112A), and the first negative electrode layer (113A) along the stacking direction (D),
the second unit battery (12) has a second positive electrode layer (121), a second electrolyte layer (122), and a second negative electrode layer (123) in the order of the second positive electrode layer (121), the second electrolyte layer (122), and the second negative electrode layer (123) along the stacking direction (D), and
a first element serving as a carrier ion of the first unit battery (11A) is different from a second element serving as a carrier ion of the second unit battery (12).

2. The battery (1A; 1B) according to claim 1, wherein:
the first element is an alkaline metal or an alkaline earth metal; and
the second element is an element that is different from an alkaline metal and an alkaline earth metal.

3. The battery (1A; 1B) according to claim 2, wherein the second element contains fluorine.

4. The battery (1A; 1B) according to claim 3, wherein the first element contains lithium, sodium, or magnesium.

5. The battery (1A; 1B) according to claim 1, wherein:
the first electrolyte layer (112A) contains a first solid electrolyte; and
the second electrolyte layer (122) contains a second solid electrolyte that is different from the first solid electrolyte.

6. The battery (1A; 1B) according to claim 5, wherein:
ion conductivity of an ion of the first element in the first electrolyte layer (112A) is higher than ion conductivity of an ion of the second element in the first electrolyte layer (112A); and
ion conductivity of the ion of the second element in the second electrolyte layer (122) is higher than ion conductivity of the ion of the first element in the second electrolyte layer (122).

7. The battery (1A; 1B) according to claim 5, wherein the first unit battery (11A) and the second unit battery (12) are in contact with each other without interposing a current collector (13).

8. The battery (1A; 1B) according to claim 5, further comprising a current collector (13) having a plurality of through-holes, the current collector (13) being arranged between the first unit battery (11A) and the second unit battery (12).

9. The battery (1A; 1B) according to claim 5, wherein:
the first solid electrolyte contains at least one selected from the group consisting of a sulfide solid electrolyte, an oxide solid electrolyte, and a halide solid electrolyte; and
the second solid electrolyte contains at least one of a fluoride of a lanthanoid element, a fluoride of an alkaline metal element, and a fluoride of an alkaline earth metal element.

10. The battery (1A; 1B) according to claim 7, wherein among surfaces of the first unit battery (11A) perpendicular to the stacking direction (D), a surface closest to the second unit battery (12) is in contact with a surface of the second unit battery (12) perpendicular to the stacking direction (D).

11. The battery (1A; 1B) according to claim 10, wherein:
among the surfaces of the first unit battery (11A) perpendicular to the stacking direction (D), all areas of the surface closest to the second unit battery (12) are in contact with the surface of the second unit battery (12) perpendicular to the stacking direction (D); and
among surfaces of the second unit battery (12) perpendicular to the stacking direction (D), all areas of a surface closest to the first unit battery (11A) are in contact with the surface of the first unit battery (11A) perpendicular to the stacking direction (D).

12. A method of producing the battery (1A; 1B) according to claim 7, the method comprising:
preparing a first positive electrode sheet constituting the first positive electrode layer (111A), a first electrolyte sheet constituting the first electrolyte layer (112A), a first negative electrode sheet constituting the first negative electrode layer (113A), a second positive electrode sheet constituting the second positive electrode layer (121), a second electrolyte sheet constituting the second electrolyte layer (122), and a second negative electrode sheet constituting the second negative electrode layer (123); and
stacking the first positive electrode sheet, the first electrolyte sheet, the first negative electrode sheet, the second positive electrode sheet, the second electrolyte sheet, and the second negative electrode sheet.
